# FASCICULE DE BREVET EUROPEEN

(11) **EP 3 483 111 B1**
(45) Date de publication et mention de la délivrance du brevet: **30.11.2022**
(21) Numéro de dépôt: 18205077.3
(22) Date de dépôt: 08.11.2018
(51) Int. Cl.: B66C 23/70, F15B 15/14, B66C 13/12, B60P 1/54

(54) **SYSTÈME TÉLESCOPIQUE COMPRENANT EN EXTRÉMITÉ UN ÉQUIPEMENT ACTIONNÉ PAR UN VÉRIN**
TELESKOPSYSTEM, DAS AN EINEM ENDE EINE AUSRÜSTUNG UMFASST, DIE MIT EINEM AKTUATOR BETÄTIGT WIRD
TELESCOPIC SYSTEM COMPRISING END EQUIPMENT ACTIVATED BY AN ACTUATOR

(30) Priorité: 10.11.2017 FR 1760582
(43) Date de publication de la demande: 15.05.2019
(73) Titulaire: Guima Palfinger S.A.S., 82300 Caussade (FR)
(72) Inventeur: LACHEZE, Laurent, 82800 BIOULE (FR); RAUCOULES, Michel, 82440 REALVILLE (FR)
(74) Mandataire: Regimbeau

(56) Documents cités:
- EP-A1- 2 520 530
- EP-A1- 2 568 084
- NL-A- 9 301 464
- US-A- 5 769 251

## Description

La présente invention concerne le domaine des vérins hydrauliques.

Plus précisément la présente invention concerne le domaine de l'alimentation des vérins hydrauliques.

Plus précisément encore la présente invention concerne le domaine des engins ou véhicules, notamment les engins mobiles, comprenant un bras à glissière, c'est-à-dire susceptible d'expansion télescopique, portant à son extrémité un équipement actionné par au moins un vérin hydraulique embarqué.

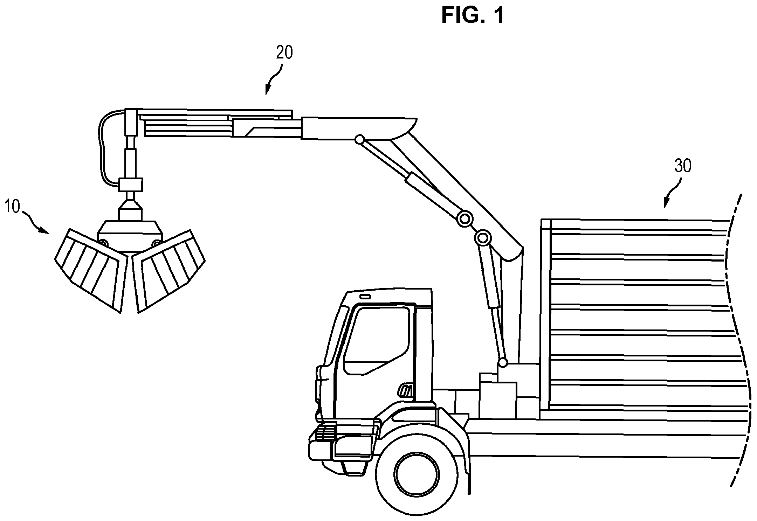

A titre d'exemple non limitatif, comme illustré sur la figure 1 annexée, il existe de tels équipements sous forme d'un godet 10 actionné par un vérin associé et porté sur l'extrémité d'un bras télescopique 20 de grue portée elle-même sur un bâti ou véhicule 30.

Il est bien entendu nécessaire de disposer de moyens d'alimentation hydraulique du vérin d'actionnement de l'équipement porté à l'extrémité du bras télescopique 20.

Le problème posé pour cette alimentation vient du fait que les distances entre le bâti 30 de l'engin qui porte le bras à glissière 20 et l'extrémité du bras à glissière 20 qui porte l'équipement 10 est par définition variable selon la position d'extension du bras à glissière 20.

La solution la plus courante pour assurer l'alimentation du vérin actionnant l'équipement 10 est à ce jour constituée de flexibles qui s'enroulent dans des chaînes d'alimentation cheminant le long du bras télescopique à glissière 20.

Il a également été proposé, comme décrit par exemple dans les documents EP 2683680 et EP 1270494, de procéder à l'alimentation du vérin hydraulique embarqué servant à l'actionnement de l'équipement prévu à l'extrémité du bras télescopique à glissière, par l'intermédiaire du vérin d'extension du bras à glissière lui-même. Le document EP 2520530 divulgue un système selon le préambule de la revendication indépendante 1.

Typiquement, comme décrit dans les documents précités, une partie de l'alimentation du vérin embarqué actionnant l'équipement est opérée par l'intermédiaire de la tige creuse de piston du vérin d'extension du bras à glissière.

Ces dernières propositions d'alimentation par l'intermédiaire du vérin d'extension s'avèrent cependant complexes et posent notamment des difficultés pour la maintenance.

La présente invention a pour but de perfectionner l'état de la technique.

Ce but est atteint selon l'invention, grâce à un système comprenant un bras à glissière comprenant deux éléments susceptibles d'extension télescopique, un vérin d'extension adapté pour assurer sur commande l'extension et la rétractation du bras à glissière, un équipement placé à l'extrémité du bras à glissière, un vérin hydraulique embarqué associé à l'équipement et colocalisé avec l'équipement à l'extrémité du bras à glissière, caractérisé par le fait qu'il comprend au moins deux tubes télescopiques disposés en parallèle des deux éléments du bras à glissière, en liaison respective étanche quelle que soit la position relative longitudinale des tubes, et adaptés pour suivre les courses d'extension et rétractation respectivement du vérin d'extension, raccordés d'une part au vérin embarqué et d'autre part à des moyens d'alimentation en fluide, pour assurer la commande en extension/rétractation du vérin embarqué, ainsi que des moyens assurant l'évacuation automatique du fluide contenu dans les tubes télescopiques d'alimentation lorsque le vérin d'extension du bras à glissière est commandé en rétractation et/ou extension et des moyens qui n'autorisent l'alimentation du vérin hydraulique embarqué que lorsque le vérin d'extension est immobile.

L'homme de l'art comprendra que le système conforme à la présente invention conduit à un système simple, fiable et facile de maintenance notamment parce qu'il autorise un accès aisé aux tubes d'alimentation du vérin embarqué.

Selon une autre caractéristique avantageuse de l'invention, le système comprend deux paires de tubes télescopiques en liaison respective étanche, disposés en parallèle du vérin d'extension et raccordées respectivement aux deux chambres du vérin embarqué de part et d'autre du piston pour assurer respectivement l'extension et la rétractation du vérin embarqué.

Selon une autre caractéristique avantageuse de l'invention, il est prévu des joints d'étanchéité de type joint torique entre chaque paire de tubes d'alimentation associés.

Selon une autre caractéristique avantageuse de l'invention, chacun des tubes d'alimentation est un tube rectiligne.

Selon une autre caractéristique avantageuse de l'invention, les moyens assurant l'évacuation automatique du fluide contenu dans les tubes télescopiques comprennent un distributeur à centre ouvert.

D'autres caractéristiques, buts et avantages de l'invention, apparaîtront à la lecture de la description détaillée qui va suivre, et en regard des dessins annexés, donnés à titre d'exemples non limitatifs et sur lesquels :
- la figure 1 précédemment décrite représente schématiquement un engin conforme à l'état de la technique,
- la figure 2 représente une vue latérale d'un vérin de bras à glissière conforme à la présente invention équipé d'une paire de tubes télescopiques d'alimentation conforme à l'invention,
- la figure 3 représente une seconde vue latérale du même vérin de bras à glissière conforme à l'invention selon une vue orthogonale à celle de la figure 2 montrant deux paires de tubes télescopiques d'alimentation,
- les figures 4 et 5 représentent des vues partielles en coupe longitudinale des deux extrémités du même vérin de bras à glissière conforme à l'invention selon les plans de coupe référencés respectivement IV-IV et V-V sur la figure 3,
- les figures 6 et 7 représentent deux vues orthogonales entre elles d'un bras de levage télescopique comprenant une potence articulée en extrémité faisant application du concept de bras à glissière conforme à l'invention,
- la figure 8 illustre schématiquement un circuit hydraulique d'alimentation d'un bras à glissière conforme à la présente invention, et
- les figures 9 à 12 illustrent différentes positions d'un bras à glissière conforme à l'invention, plus précisément la figure 9 illustre différentes positions de la potence articulée, la figure 10 représente une vue du bras en position rétractée, potence verticale, la figure 11 représente une vue du bras télescopique étendue, potence verticale et la figure 12 représente une vue du bras télescopique étendu, potence inclinée.

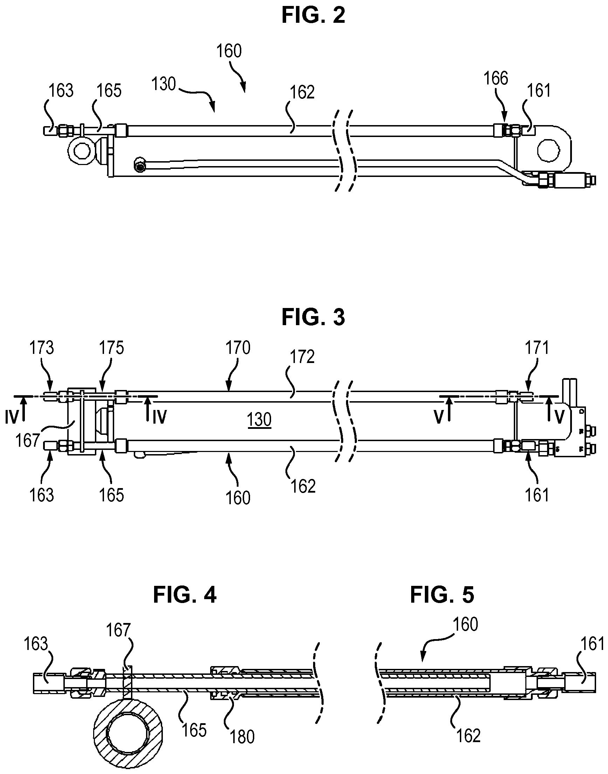

On a représenté sur les figures 2 et suivantes un bras à glissière 100 composé de deux éléments principaux 110, 120 susceptibles d'extension télescopique.

Par convention, l'élément 110 est situé du côté d'un châssis support, par exemple un véhicule ou engin, et l'élément 120 est susceptible de déplacement par rapport à ce châssis support sous l'actionnement d'un vérin d'extension 130.

Le cylindre et la tige de piston du vérin d'extension 130 sont fixés respectivement sur les éléments 110, 120 du bras à glissière.

De façon connue en soit, l'extension du vérin 130 conduit à l'extension du bras à glissière 100 et respectivement la rétractation du vérin 130 conduit à la rétractation du bras à glissière 100.

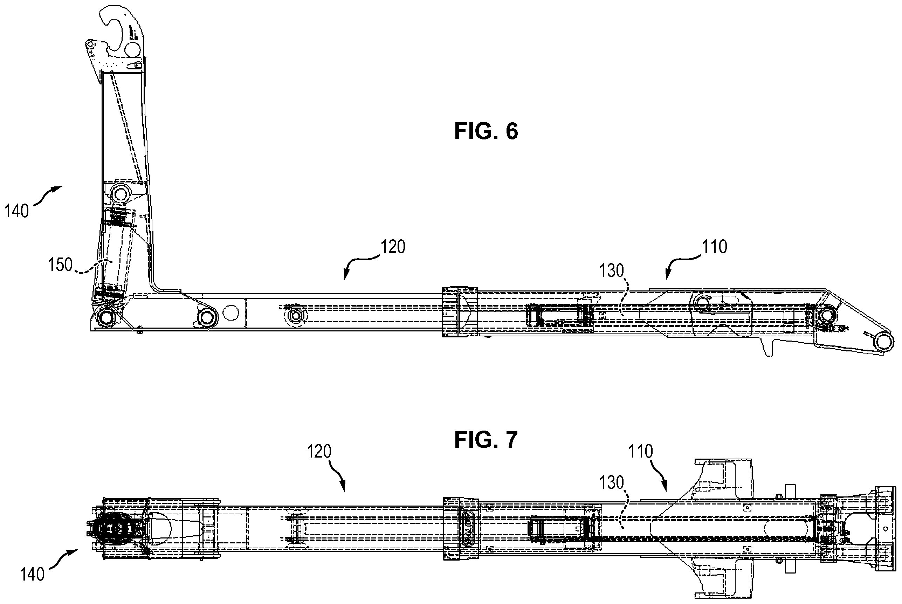

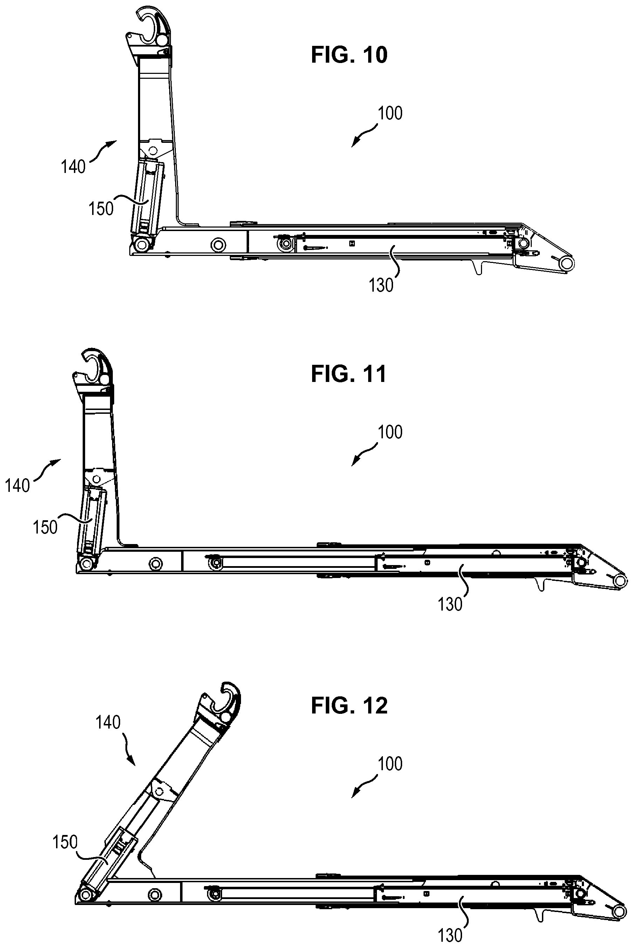

Comme indiqué précédemment, dans le cadre de l'invention, l'élément mobile 120 du bras à glissière 100 porte à son extrémité un équipement 140, par exemple une potence articulée comme illustré sur les figures 6 à 12, actionné par au moins un vérin hydraulique embarqué 150.

Dans le cadre de l'invention, comme indiqué précédemment, il est prévu au moins une paire 160 de tubes télescopiques 162, 165 de diamètres différents, engagés l'un dans l'autre et en liaison respective étanche quelle que soit la position relative longitudinale des tubes 162, 165. On entend par liaison étanche que le tube 165 de petit diamètre étant engagé dans le tube 162 de grand diamètre, il existe une étanchéité hydraulique entre les deux tubes 162 et 165 quelle que soit la position relative des deux tubes 162 et 165.

Plus précisément encore, selon l'invention, il est prévu de préférence deux paires 160, 170 de tubes télescopiques 162, 165 et 172, 175 respectant la liaison respective étanche quelle que soit la position relative longitudinale des tubes.

Selon le mode de réalisation représenté sur les figures annexées, les tubes 162, 172 sont de grand diamètre tandis que les tubes 165 et 175 sont de diamètre plus petit et sont engagés respectivement dans les tubes 162, 172.

La liaison étanche entre les tubes 162, 165 et respectivement 172, 175 peut être assurée par tout moyen approprié, de préférence grâce à des joints toriques ou équivalents disposés entre la surface externe des tubes de petit diamètre 165, 175 et la surface interne des tubes 162, 172 de grand diamètre.

De tels joints toriques sont schématisés sous la référence 180 sur la figure 4.

Bien entendu, ces joints 180 peuvent faire l'objet de nombreuses variantes de réalisation selon la pression de fluide mise en jeu.

Il peut s'agir de joints à lèvres, de joints en X ou de toute autre disposition connue de l'homme de l'art et appropriée.

Les deux paires 160, 170 de tubes 162, 165 et 172, 175 sont disposées parallèlement à l'axe longitudinal du vérin d'extension 130 et par conséquent également parallèlement à la direction d'élongation des éléments 110, 120 du bras à glissière et sont fixés respectivement sur le cylindre et sur la tige de piston du vérin d'extension 130.

La fixation des tubes 162, 172 sur le cylindre du vérin d'extension 130 et la fixation des tubes 165, 175 sur la tige de piston du vérin d'extension 130, sont assurées par tout moyen approprié, par exemple par l'intermédiaire de platines 166, 167 dimensionnées pour reprendre les efforts.

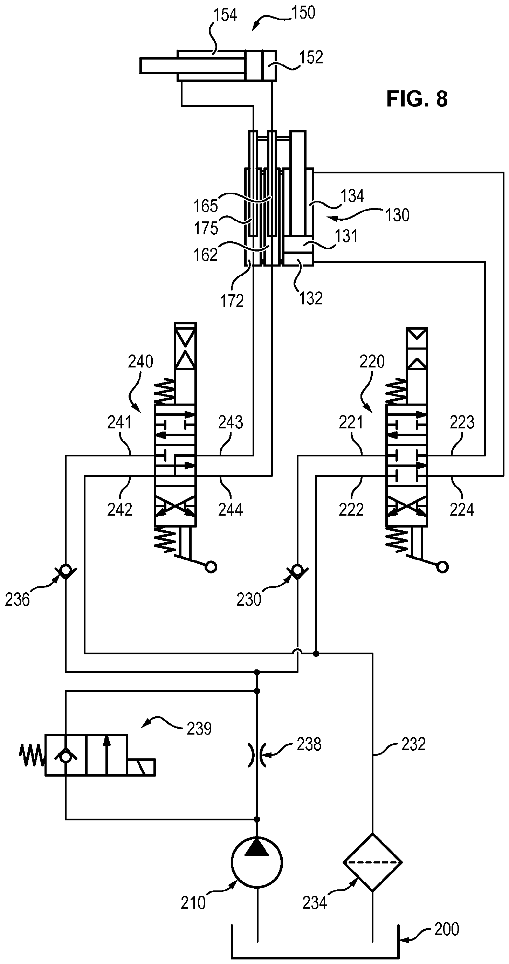

Les extrémités amonts 161, 171 des tubes 162, 172 sont reliées à des moyens d'alimentation qui seront décrits par la suite en regard de la figure 8.

Les extrémités avals 163, 173 des tubes avals 165, 175 sont elles reliées aux chambres 152, 154 respectives du vérin embarqué 150.

La longueur cumulée des deux tubes 162, 165 et respectivement 172, 175 doit être au moins égale à la longueur maximale en extension du bras à glissière 100. La longueur de superposition des deux tubes 162, 165 et respectivement 172, 175 doit être au moins égale à la course du bras à glissière 100 entre ses positions respectivement rétractée et étendue.

Les tubes 162, 165 et 172, 175 sont dimensionnés afin de résister à la pression d'alimentation et à éviter tout risque de flambage.

On va maintenant décrire le circuit d'alimentation illustré sur la figure 8.

Sur cette figure, on aperçoit un réservoir d'huile 200 et une pompe 210 qui pompe de l'huile dans le réservoir 200.

Un distributeur 220, par exemple quatre voies, trois positions, permet de diriger sélectivement l'huile débitée par la pompe 210 vers le vérin d'extension 130.

Plus précisément, une entrée 221 du distributeur 220 est reliée par l'intermédiaire d'un clapet anti-retour 230 à la sortie de la pompe 210.

Une seconde entrée 222 du distributeur 220 est reliée à un conduit de retour 232 qui débouche dans le réservoir 200 par l'intermédiaire d'un filtre 234.

Les deux sorties 223, 224 du distributeur 220 sont reliées respectivement aux chambres 132, 134 disposées respectivement de part et d'autre du piston 131 du vérin d'extension 130.

En position de repos illustrée sur la figure 8, le distributeur 220 est en centre fermé. Les quatre ports 221, 222, 223 et 224 sont isolés. Le vérin d'extension 130 est immobile.

Dans une première position de travail, le distributeur 220 assure la liaison de l'entrée 221 sur la sortie 223 et la liaison de l'entrée 222 sur la sortie 224 provoquant l'alimentation de la chambre 132 et par conséquent l'extension du vérin 130.

Inversement dans la deuxième position de travail, le distributeur 220 assure l'alimentation croisée de la sortie 224 par l'entrée 221 et de la sortie 223 par l'entrée 222 assurant ainsi l'alimentation de la chambre opposée 134 du vérin 130 et par conséquent sa rétractation.

On aperçoit en outre sur la figure 8 un distributeur 240 assurant l'alimentation du vérin 150 par l'intermédiaire des paires de tubes télescopiques 162, 165 et 172, 175.

Le distributeur 240 est typiquement du type quatre voies, trois positions.

En position de repos illustré sur la figure 8, le distributeur 240 est en centre ouvert.

Les deux sorties 243, 244 reliées par ailleurs aux extrémités amont 161, 171 des tubes d'alimentation 162, 172 sont reliées au réservoir 200.

Dans une première position de travail, le distributeur 240 assure la liaison de la première entrée 241 avec la première sortie 243 et la liaison de la deuxième entrée 242 avec la deuxième sortie 244 pour assurer l'alimentation de la chambre de rétractation 154 du vérin 150.

Inversement, dans la seconde position de travail, le distributeur 240 assure la liaison croisée de l'entrée 241 avec la sortie 244 et de l'entrée 242 avec la sortie 243.

Dans cette deuxième position de travail, la deuxième chambre 152 est alimentée en huile sous pression pour assurer l'extension du vérin actionnant l'équipement 140.

La première entrée 241 est reliée à la sortie de la pompe 210 par l'intermédiaire d'un clapet anti-retour 236.

La deuxième entrée 242 du distributeur 240 est reliée au réservoir 200 par l'intermédiaire du filtre 234.

On notera que de préférence, le circuit d'alimentation comprend également des moyens permettant de moduler le débit fourni par la pompe 210 au vérin 150 afin de définir deux vitesses d'actionnement.

De tels moyens peuvent être formés par exemple par une restriction 238 placée entre la sortie de la pompe 210 et le clapet anti-retour 236 pour définir un faible débit d'huile et par conséquent une faible vitesse d'actionnement du vérin 250 et un distributeur 239 formant clapet tout ou rien placé en parallèle de la restriction 238.

En position ouverte du clapet 239, la restriction 238 est court-circuitée et un débit fort peut être adressé au vérin 250.

En position fermée du clapet 239, le fluide dirigé vers le vérin 150 passe par la restriction 238.

Lorsque le bras à glissière 100 bouge sous la commande du vérin d'extension 130, plus précisément l'élément 120 est déplacé par rapport à l'élément 110, le système d'alimentation constitué par les paires 160, 170 de tubes 162, 165 et 172, 175 suit le mouvement.

Le distributeur 240 est placé automatiquement en position médiane en centre ouvert lorsque le vérin d'extension 130 est commandé en extension/rétractation. Ainsi la position centre ouvert du distributeur 240 permet d'éviter tout risque d'éclatement des tubes 162, 165 et 172, 175.

De préférence, le circuit d'alimentation est contrôlé de sorte que le mouvement du vérin alimenté 150 n'est autorisé que lorsque le vérin d'extension 130 est immobile.

Le système conforme à l'invention est compact et peut être intégré facilement sur le bras à glissière 100.

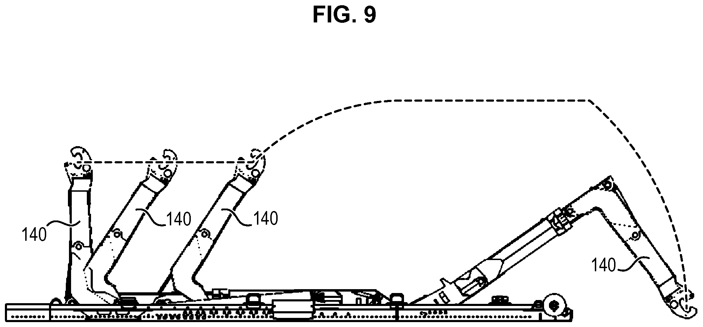

Les figures 9 à 12 illustrent l'application du système conforme à l'invention sur un bras de levage 100 comprenant une potence articulée 140.

## Revendications

1. Système comprenant un bras à glissière (100) comprenant deux éléments (110, 120) susceptibles d'extension télescopique, un vérin d'extension (130) adapté pour assurer sur commande une extension/rétractation du bras à glissière (100), un équipement (140) placé à l'extrémité du bras à glissière (100), un vérin hydraulique embarqué (150) associé à l'équipement (140) et colocalisé avec l'équipement à l'extrémité du bras à glissière, au moins une paire de tubes (162, 165) télescopiques disposés en parallèle des deux éléments (110, 120) du bras à glissière, en liaison respective étanche quelle que soit la position relative longitudinale des tubes et adaptés pour suivre les courses d'extension et rétractation respectivement du vérin d'extension (130), reliés au vérin embarqué (150) et d'autre part à des moyens d'alimentation en fluide (210), pour assurer la commande en extension/rétractation du vérin embarqué (150), des moyens (240) assurant l'évacuation automatique du fluide contenu dans les tubes télescopiques (162, 165) lorsque le vérin d'extension (130) du bras à glissière (100) est commandé en rétractation et/ou extension , **caractérise par le fait qu'**il comprend des moyens qui n'autorisent l'alimentation du vérin hydraulique embarqué (150) que lorsque le vérin d'extension (130) est immobile.

2. Système selon la revendication 1, **caractérisé par le fait qu'**il comprend deux paires (160, 170) de tubes télescopiques d'alimentation (162, 165 ; 172, 175) en liaison respective étanche et disposés en parallèle du vérin d'extension (130).

3. Système selon la revendication 2, **caractérisé par le fait que** les deux paires (160, 170) de tubes télescopiques d'alimentation (162, 165 ; 172, 175) sont raccordées respectivement aux deux chambres (152, 154) du vérin embarqué (150) de part et d'autre du piston pour assurer respectivement l'extension et la rétractation du vérin embarqué (150).

4. Système selon l'une des revendications 1 à 3, **caractérisé par le fait qu'**il comprend des joints d'étanchéité (180) entre chaque paire de tubes d'alimentation (162, 165 ; 172, 175).

5. Système selon la revendication 4, **caractérisé par le fait que** les joints d'étanchéité (180) sont de type joint torique entre chaque paire de tubes d'alimentation associés (162, 165 ; 172, 175).

6. Système selon l'une des revendications 1 à 5, **caractérisé par le fait que** chacun des tubes d'alimentation (162, 165 ; 172, 175) est un tube rectiligne.

7. Système selon l'une des revendications 1 à 6, **caractérisé par le fait que** les moyens (240) assurant l'évacuation automatique du fluide hors des tubes d'alimentation (162, 165 ; 172, 175) comprennent un distributeur (240) commutable entre une position de repos dans laquelle les tubes télescopiques (162, 165) sont reliés à un réservoir (200) et au moins une position de travail dans laquelle les tubes télescopiques (162, 165) sont reliés à une source d'huile sous pression.

8. Système selon l'une des revendications 1 à 7, **caractérisé par le fait que** la longueur cumulée des deux tubes (162, 165 ; 172, 175) est au moins égale à la longueur maximale en extension du bras à glissière (100), tandis que la longueur de superposition des deux tubes (162, 165 ; 172, 175) est au moins égale à la course du bras à glissière (100) entre ses positions respectivement rétractée et étendue.

9. Système selon l'une des revendications 1 à 8, **caractérisé par le fait qu'**il comprend des moyens permettant de sélectionner deux débits d'alimentation du vérin (150), par exemple une restriction (238) et un clapet (239) placé en parallèle de la restriction.

10. Bras télescopique (100) comprenant une potence articulée (140) et un système conforme à l'une des revendications précédentes.

## Patentansprüche

1. System, umfassend einen Arm mit Gleitschiene (100), umfassend zwei Elemente (110, 120), die zum teleskopischen Ausfahren geeignet sind, einen Ausfahrzylinder (130), der zum Gewährleisten eines Ausfahrens/Einzugs des Arms mit Gleitschiene (100) auf Befehl geeignet ist, eine Ausrüstung (140), die am Ende des Arms mit Gleitschiene (100) angeordnet ist, einen integrierten Hydraulikzylinder (150), der der Ausrüstung (140) zugeordnet und mit der Ausrüstung am Ende des Arms mit Gleitschiene zusammen angeordnet ist, wenigstens ein Paar Teleskopröhren (162, 165), die parallel zu den zwei Elementen (110, 120) des Arms mit Gleitschiene angeordnet sind, in jeweiliger abgedichteter Verbindung unabhängig von der relativen Längsposition der Röhren und die geeignet sind, um die jeweiligen Ausfahr- und Einzugsläufe des Ausfahrzylinders (130) zu verfolgen, die mit dem integrierten Zylinder (150), und andererseits mit Medium-Versorgungsmitteln (210) verbunden sind, um den Ausfahr-/Einzugsbefehl des integrierten Zylinders (150) zu gewährleisten, Mittel (240), die den automatischen Austrag des in den Teleskopröhren (162, 165) enthaltenen Mediums gewährleisten, wenn der Ausfahrzylinder (130) des Arms mit Gleitschiene (100) zum Einziehen und/oder Ausfahren gesteuert ist, **gekennzeichnet durch** die Tatsache, dass es Mittel umfasst, die die Versorgung des integrierten Hydraulikzylinders (150) nur zulassen, wenn der Ausfahrzylinder (130) unbewegt ist.

2. System gemäß Anspruch 1, **gekennzeichnet durch** die Tatsache, dass es zwei Paare (160, 170) von Versorgungs-Teleskopröhren (162, 165; 172, 175) umfasst, die jeweils abgedichtet und parallel zum Ausfahrzylinder (130) ist.

3. System gemäß Anspruch 2, **gekennzeichnet durch** die Tatsache, dass die zwei Paare (160, 170) Versorgungs-Teleskopröhren (162, 165; 172, 175) jeweils an zwei Kammern (152, 154) des integrierten Zylinders (150) auf jeder Seite des Kolbens angeschlossen sind, um jeweils das Ausfahren und den Einzug des integrierten Zylinders (150) zu gewährleisten.

4. System gemäß einem der Ansprüche 1 bis 3, **gekennzeichnet durch** die Tatsache, dass es Dichtungsringe (180) zwischen jedem Paar von Versorgungsröhren (162, 165; 172, 175) umfasst.

5. System gemäß Anspruch 4, **gekennzeichnet durch** die Tatsache, dass die Dichtungsringe (180) zwischen jedem Paar zugeordneter Versorgungsröhren (162, 165; 172, 175) vom Typ O-Ringe sind.

6. System gemäß einem der Ansprüche 1 bis 5, **gekennzeichnet durch** die Tatsache, dass jede Versorgungsröhre (162, 165; 172, 175) eine gerade Röhre ist.

7. System gemäß einem der Ansprüche 1 bis 6, **gekennzeichnet durch** die Tatsache, dass die Mittel (240), die den automatischen Austrag des Mediums aus den Versorgungsröhren (162, 165; 172, 175) gewährleisten, einen Spender (240) umfassen, der zwischen einer Ruheposition, in der die Teleskopröhren (162, 165) mit einem Tank (200) verbunden sind, und wenigstens einer Arbeitsposition, in der die Teleskopröhren (162, 165) mit einer mit Druck beaufschlagten Ölquelle verbunden sind, umschaltbar sind.

8. System gemäß einem der Ansprüche 1 bis 7, **gekennzeichnet durch** die Tatsache, dass die kumulierte Länge der zwei Röhren (162, 165; 172, 175) wenigstens gleich der maximale Länge beim Ausfahren des Arms mit Gleitschiene (100) ist, während die Überlagerungslänge der zwei Röhren (162, 165; 172, 175) wenigstens gleich dem Lauf des Arms mit Gleitschiene (100) zwischen seiner jeweils eingezogenen und ausgefahrenen Position ist.

9. System gemäß einem der Ansprüche 1 bis 8, **gekennzeichnet durch** die Tatsache, dass es Mittel umfasst, die das Auswählen von zwei Versorgungsdurchsätzen des Zylinders (150), zum Beispiel eine Einschnürung (238), und ein Ventil (239), das parallel zur Einschnürung angeordnet ist, zulassen.

10. Teleskoparm (100), umfassend eine artikulierte Strebe (140) und ein System gemäß einem der voranstehenden Ansprüche.

## Claims

1. A system comprising a slide arm (100) comprising two elements (110, 120) capable of telescopic extension, an extension cylinder (130) suitable for providing an extension/retraction of the slide arm (100) when controlled, a device (140) placed at the end of the slide arm (100), an on-board hydraulic cylinder (150) associated with the device (140) and co-located with the device at the end of the slide arm, at least one pair of telescopic tubes (162, 165) arranged in parallel with the two elements (110, 120) of the slide arm, in respective sealed connection regardless of the relative longitudinal position of the tubes and suitable for tracking the extension and retraction strokes, respectively, of the extension cylinder (130), connected to the on-board cylinder (150) and on the other hand to means for supplying fluid (210), to provide the extension/retraction control of the on-board cylinder (150), means (240) ensuring the automatic discharge of the fluid contained in the telescopic tubes (162, 165) when the extension cylinder (130) of the slide arm (100) is controlled in retraction and/or in extension, **characterized by** the fact that it comprises means which allow supplying the on-board hydraulic cylinder (150) only when the extension cylinder (130) is stationary.

2. The system according to claim 1, **characterized by** the fact that it comprises two pairs (160, 170) of telescopic supply tubes (162, 165; 172, 175) in respective sealed connection and arranged in parallel with the extension cylinder (130).

3. The system according to claim 2, **characterized by** the fact that the two pairs (160, 170) of telescopic supply tubes (162, 165; 172, 175) are respectively connected to the two chambers (152, 154) of the on-board cylinder (150) on either side of the piston to respectively provide extension and retraction of the on-board cylinder (150).

4. The system according to one of claims 1 to 3, **characterized by** the fact that it comprises gaskets (180) between each pair of supply tubes (162, 165; 172, 175).

5. The system according to claim 4, **characterized by** the fact that the gaskets (180) are of the O-ring type between each pair of associated supply tubes (162, 165; 172, 175).

6. The system according to one of claims 1 to 5, **characterized by** the fact that each of the supply tubes (162, 165; 172, 175) is a rectilinear tube.

7. The system according to one of claims 1 to 6, **characterized by** the fact that the means (240) ensuring the automatic discharge of fluid from the supply tubes (162, 165; 172, 175) comprise a distributor (240) switchable between a rest position in which the telescopic tubes (162, 165) are connected to a reservoir (200) and at least one working position in which the telescopic tubes (162, 165) are connected to a source of pressurized oil.

8. The system according to one of claims 1 to 7, **characterized by** the fact that the cumulative length of the two tubes (162, 165; 172, 175) is at least equal to the maximum length in extension of the slide arm (100), while the superposition length of the two tubes (162, 165; 172,175) is at least equal to the stroke of the slide arm (100) between its retracted and extended positions respectively.

9. The system according to one of claims 1 to 8, **characterized by** the fact that it comprises means allowing selecting two supply flow rates for the cylinder (150), for example a restriction (238) and a valve (239) placed in parallel with the restriction.

10. A telescopic arm (100) comprising an articulated bracket (140) and a system conforming to one of the preceding claims.
